# EUROPEAN PATENT SPECIFICATION

(11) **EP 1 877 450 B1**
(45) Date of publication and mention of the grant of the patent: **10.07.2013**
(21) Application number: 06752193.0
(22) Date of filing: 03.05.2006
(51) Int. Cl.: C08F 4/649

(54) **NOVEL COMBINATIONS OF SILANE ELECTRON DONORS FOR USE IN CATALYST COMPOSITIONS**
NEUE KOMBINATIONEN VON SILAN-ELEKTRONENDONATOREN ZUR VERWENDUNG IN KATALYSATORZUSAMMENSETZUNGEN
NOUVELLES COMBINAISONS DE DONNEURS D'ELECTRONS DE SILANE DESTINEES A ETRE UTILISEES DANS DES COMPOSITIONS CATALYTIQUES

(30) Priority: 06.05.2005 US 124032
(43) Date of publication of application: 16.01.2008
(73) Proprietor: FINA TECHNOLOGY, INC., Houston, Texas 77267-4412 (US)
(72) Inventor: THORMAN, Joseph, L., Houston, TX 77025 (US); BLACKMON, Kenneth, P., Houston, TX 77062 (US)
(74) Representative: Leyder, Francis
(86) International application number: PCT/US2006/017083
(87) International publication number: WO 2006/121746

(56) References cited:
- US-A- 5 652 303
- US-A- 5 652 303
- US-A1- 2004 266 962
- US-B2- 6 566 294

## Description

### BACKGROUND OF THE INVENTION

### 1. Technical Field

This invention relates generally to olefinic polymers, and more particularly to catalyst systems for preparing such polymers.

### 2. Background of the Art

A number of catalyst systems exist for the preparation of olefinic polymers. Many of these systems are solid systems comprising magnesium, titanium, halogen and an electron donor. Such systems find particular use in polymerization of alpha-olefins having at least 2 carbon atoms, and produce a highly stereoregular polymer in high yield.

Generally such olefinic polymers display a broad range of molecular weight distributions (MWD) and have excellent mechanical properties. However, improvements in MWD continue to be sought for some applications requiring better processability and resins having better mechanical properties.

One way to improve resin properties is to broaden molecular weight distribution. This can be accomplished by preparing olefins having different molecular weights in a plurality of polymerization reactors and then blending them. This approach is obviously time-consuming and adds to the complexity and expense of polymer production processes.

An alternative way to accomplish the same goal is to use a polymerization catalyst system having at least two specific external electron donors. This allows production of a polymer having improved properties, due to broadened molecular weight distribution, in a single process step. Combinations of electron donors identified thus far show some improvements, but attainable MWD's using commercially known combinations have remained disappointing. Accordingly, it is desired in the art to identify a process for preparing olefinic polymers that results in products with superior physical properties and MWDs.
US 2004/266962 discloses electron pair alternatives to cyclohexylmethyldimethoxysilane (CMDSL
US 5652303 discloses a catalyst system comprising at least two electron donors that provides an olefin polymer having a broad molecular weight, as well as a process for polymerizing or copolymerizing an olefin in the presence of the catalyst.

### SUMMARY OF THE INVENTION

In one aspect, the invention is a process for preparing an olefinic polymer including contacting at least one olefinic C3+ monomer and a catalyst composition including a Ziegler-Natta catalyst, dicyclopentyl dimethoxysilane as a first electron donor, and a second electron donor selected from the group consisting of methyl trimethoxysilane, methyl triethoxysilane, dimethyl dimethoxysilane, and mixtures thereof. These components are combined under reaction conditions suitable to form an olefinic polymer wherein the polymer produced has a molecular weight distribution that is broader than that of a polymer produced under the same conditions using any of the electron donors alone.

In another aspect, the invention is an olefinic polymer prepared by a process including contacting at least one olefinic C3+ monomer and a catalyst composition including a Ziegler-Natta catalyst, dicyclopentyl dimethoxysilane as a first electron donor, and a second electron donor selected from the group consisting of methyl trimethoxysilane, methyl triethoxysilane, dimethyl dimethoxysilane, and mixtures thereof. These components are combined under reaction conditions suitable to form an olefinic polymer wherein the olefinic polymer produced has a molecular weight distribution that is broader than that of a polymer produced under the same conditions using any of the electron donors alone.

In still another aspect, the invention is a process for preparing an olefinic polymer including contacting one or more monomers selected from the group consisting of propylene, ethylene, and combinations thereof, and a catalyst composition including a Ziegler-Natta catalyst containing titanium, magnesium, a cocatalyst or a combination thereof; a dicyclopentyl dimethoxysilane as a first electron donor; and a second electron donor selected from the group consisting of methyl trimethoxysilane, methyl triethoxysilane, dimethyl dimethoxysilane, and mixtures thereof. In this aspect, the first and second electron donors are present in a ratio of from 1:5 to 5:1. The components are combined under reaction conditions suitable to form an olefinic polymer wherein the olefinic polymer produced has a molecular weight distribution that is broader than that of a polymer produced under the same conditions using any of the electron donors alone.

Another aspect of the invention is an article of manufacture comprising a film, an injection molded article, or a blow molded article including an olefinic polymer prepared by a process including contacting at least one olefinic C3+ monomer and a catalyst composition including a Ziegler-Natta catalyst, dicyclopentyl dimethoxysilane as a first electron donor, and a second electron donor selected from the group consisting of methyl trimethoxysilane, methyl triethoxysilane, dimethyl dimethoxysilane, and mixtures thereof. These components are combined under reaction conditions suitable to form an olefinic polymer wherein the olefinic polymer produced has a molecular weight distribution that is broader than that of a polymer produced under the same conditions using any of the electron donors alone.

### DETAILED DESCRIPTION OF THE INVENTION

In this invention one or more olefin monomers, at least one of the monomers having at least 3 carbons (C3+ monomer), may be polymerized by subjecting them, under suitable reaction conditions, to the effects of a polymerization catalyst system. As used herein, the term "polymerization" denotes homopolymerization and/or copolymerization, and the term "polymer" refers to homopolymers, copolymers, and any and all multi-mer polymers such as terpolymers.

This catalyst system desirably includes a Ziegler-Natta catalyst component, which in some embodiments may be a solid titanium catalyst component comprising magnesium, titanium, halogen and an electron donor. This solid titanium catalyst component may be prepared generally by contacting a magnesium compound, a titanium compound, and an electron donor under reaction conditions suitable for forming a catalyst. Examples of the titanium compound used in the preparation of the solid titanium catalyst component are tetravalent titanium compounds of the following formula:

Ti(OR)_{g}(X)_{4-g}

wherein R is a hydrocarbon group, X is a halogen atom, and g is from 0 to 4.

More specific examples include titanium tetrahalides such as TiCl₄, TiBr₄, and TiI₄; alkoxy titanium trihalides such as Ti(OCH₃)Cl₃, Ti(OC₂H₅)Cl₃, Ti(O n-C₄Hg)Cl₃, Ti(OC₂H₅)Br₃, and Ti(O iso-C₄H₉)Br; dialkoxytitanium dihalides such as Ti(OCH₃)₂Cl₂, Ti(OC₂H₅)₂Cl₂, Ti(O n-C₄H₉)₂Cl₂ and Ti(OC₂H₅)₂Br₂; trialkoxytitanium monohalides such as Ti(OCH₃)₃Cl, Ti(OC₂H₅)₃Cl, Ti(O n-C₄H₉)₃Cl and Ti(OC₂H₅)₃Br; and tetraalkoxy titaniums such as Ti(OCH₃)₄, Ti(OC₂H₅)₄ and Ti(O n-C₄H₉)₄.

Of these, the halogen-containing titanium compounds, particularly titanium tetrahalides, are desirable in some embodiments. Especially preferred in other embodiments is titanium tetrachloride. The titanium compounds may be used singly or in combination with each other. The titanium compound may be diluted with a hydrocarbon compound or a halogenated hydrocarbon compound.

The magnesium compound to be used in the preparation of the solid titanium catalyst component may include dimethyl magnesium, diethyl magnesium, dipropyl magnesium, dibutyl magnesium, diamyl magnesium, dihexyl magnesium, didecyl magnesium, magnesium ethyl chloride, magnesium propyl chloride, magnesium butyl chloride, magnesium hexyl chloride, magnesium amyl chloride, butyl ethoxy magnesium, ethyl butyl magnesium and butyl magnesium halides. These magnesium compounds may be used singly or in combination, or they may form complexes with the organoaluminum compounds to be described. These magnesium compounds may be liquid or solid.

Specific examples of the magnesium compounds include magnesium halides such as magnesium chloride, magnesium bromide, magnesium iodide and magnesium fluoride; alkoxy magnesium halides such as magnesium methoxy chloride, magnesium ethoxy chloride, magnesium isopropoxy chloride, magnesium phenoxy chloride and magnesium methylphenoxy chloride; alkoxy magnesiums such as ethoxy magnesium, isopropoxy magnesium, butoxy magnesium, n-octoxy magnesium and 2-ethylhexoxy magnesium; aryloxy magnesiums such as phenoxy magnesium and dimethylphenoxy magnesium; and magnesium carboxylates such as magnesium laurate and magnesium stearate.

In preparing the Ziegler-Natta component of the inventive catalyst compositions, it is desirable to use an electron donor. First, an internal electron donor may be used in the formation reaction of the catalyst. The internal electron-donor compounds suitable for preparing conventional Ziegler-Natta catalyst components include ethers, ketones, lactones, electron donors compounds with N, P and/or S atoms and specific classes of esters.

The second use for an electron donor in a catalyst system is as an external electron donor and stereoregulator in the polymerization reaction. The same compound may be used in both instances, although typically they are different. A description of the two types of electron donors is provided in U.S. Pat. No. 4,535,068. Electron donors are further described in U.S. Patent No. 5,652,303, and U. S. Patent Publication No. 20030060580.

Examples of electron donors useful with the invention may include, but are not limited to esters of organic or inorganic oxides, ethers, acid amides and acid anhydrides. More specific examples include; inorganic acid esters such as ethyl silicate and butyl silicate; acid halides having 1 to 15 carbon atoms such as acetyl chloride, benzoyl chloride, toluyl chloride, anisoyl chloride and phthaloyl dichloride; ethers having 2 to 20 carbon toms such as methyl ether, ethyl ether, isopropyl ether, butyl ether, amyl ether, tetrahydrofuran, anisole and diphenyl ether; acid amides such as acetamide, benzamide and toluamide; acid anhydrides such as benzoic anhydride and phthalic anhydride; amines such as methylamine, ethylamine, triethylamine, tributylamine, piperidine, tribenzylamine, aniline, pyridine, picoline and tetramethylethylenediamine; and nitriles such as acetonitrile, benzonitrile and trinitrile.

The invention includes use of a particularly effective combination of external electron donors. One of these external electron donors is dicyclopentyldimethoxysilane (CPDS). At least one additional electron donor is also required. This second electron donor is selected from the group consisting of methyltrimethoxysilane (MTMS), methyltriethoxysilane (MTES), dimethyldimethoxysilane (DMDS), and mixtures thereof. It has surprisingly been found that the combination of these particular materials with the Ziegler-Natta catalyst and the selected olefinic monomers results in a polymer having a synergistically and significantly broadened molecular weight distribution as compared with polymers prepared with only one of these electron donors.

The total weight amount of the electron donors, in one embodiment, may vary from 0.5 to 500 ppm, based upon the weight of the monomer. In another embodiment the total amount may vary from 0.5 to 200 ppm, and in another non-limiting embodiment, may vary from 0.5 to 50 ppm. The molar ratio of the two donors is, in some desirable embodiments, from 5 moles of CPDS to 1 mole of the second electron donor. In other desirable embodiments it may be from 1 mole of CPDS to 5 moles of the second electron donor.

In still another non-limiting embodiment, the molar ratio of the total silane donors to the Ziegler-Natta compound may vary from 0.25 to 500; in yet another non-limiting embodiment from 0.5 to 100; and in still another non-limiting embodiment from 0.5 to 20.

The invention may include the use of a cocatalyst. Typically the cocatalyst is an organoaluminum compound. Desirably the co-catalyst is an aluminum alkyl having the formula AIR₃, where R is an alkyl having 1 to 8 carbon atoms, with R being the same or different. Examples of suitable aluminum alkyls are trimethyl aluminum (TMA), triethyl aluminum (TEAI) and triisobutyl aluminum (TiBAI).

Olefinic polymers, including but not limited to polypropylene, random propylene-ethylene copolymers, and the like, may be produced by a variety of polymerization methods, including slurry polymerization in the presence of a solvent, e.g., hexane, such as in a loop or CSTR-type reactor; bulk polymerization in which the monomer being polymerized also serves as its own diluent, which is typically carried out in a loop-type reactor; gas phase polymerization, which is typically carried out in a fluidized bed reactor under lower pressures than bulk polymerization; and so forth. In a typical bulk process for preparing polypropylene, for example, one or more loop reactors operating generally from 50 to 100°C (and in another non-limiting embodiment from 60 to 80°C), with pressures of from 300 to 700 psi (2.1 to 4.8 MPa) may be employed. In other non-limiting embodiments pressures may vary from 450 to 650 psi (3.1 to 4.5 MPa). The various catalytic components, i.e., Ziegler-Natta catalyst, any selected cocatalyst CPDS and selected second electron donor or donors, may be introduced into the reactor, along with a molecular weight controlling agent if desired. A frequently-selected molecular weight controlling agent is hydrogen. The resulting polypropylene fluff or powder is continuously removed from the reactor. The fluff may then be subjected to extrusion to produce pellets.

For bulk polymerization, reactor temperatures are desirably maintained, in one embodiment, from 50 to 100°C, and in other embodiments desirably from 60 to 80°C. Hydrogen concentrations may vary, but in one embodiment are maintained at from 0.02 mol% to 1.1 mol%. In another non-limiting embodiment the hydrogen is maintained from 0.04 mol% to 0.5 mol%, based on monomer. The hydrogen concentration may be varied, as is known to those skilled in the art, to adjust the desired final resin melt flow characteristics.

The resulting polymers produced using the novel catalyst system described herein are, in one embodiment, those having a melt flow after polymerization of at least 0.5 dg/min or greater, as measured according to ASTM D1238-95. Those skilled in the art will be aware that typical melt flow rates useful for preparation of biaxially-oriented polypropylene (BOPP) films are from 1 to 100 dg/min, with from 1 to 16 dg/min being frequently employed commercially. At these melt flow rates polymers produced by the process of the invention may, in some embodiments, still retain desirably low xylene solubles contents. Thus, the polymers of this invention are expected to be particularly suitable for preparing films as well as for extensive use in injection molding applications. The polymers produced may also be characterized in some embodiments as having low xylene solubles contents of not more than 6 weight percent, and in other embodiments from 1 to 5 weight percent.

Additionally, the polypropylene homopolymers or copolymers produced using the inventive catalyst system may have a meso pentad level of from 93 to 99 weight percent, as measured via ¹³C NMR on the insoluble (i.e., crystalline) fraction. The polydispersity (Mw/Mn), i.e., the molecular weight distribution (MWD), of the polymer, as measured via Size Exclusion Chromatography, may in some embodiments range from 5 to , and in other, non-limiting embodiments, from 7 to 11.

As used herein, the terms "propylene polymer" or "polypropylene", unless specified otherwise, shall mean propylene homopolymers and those polymers composed primarily of propylene and limited amounts of other comonomers, such as ethylene. The copolymers of the invention may have from 0.1 to 9 weight percent comonomers. In another embodiment, the copolymers have from 0.5 to 8 percent comonomers. In still another embodiment, the copolymers may have from 2 to 8 percent comonomer content. The catalyst components of this invention provide another way of adjusting the microtacticity of the polypropylene and thus improving the properties of the final product, particularly where such is destined for use in preparing films. The term "terpolymers" shall mean polymers having at least three monomers, at least one of which is propylene, wherein the combined weight percent of monomers other than propylene may range from 0.1 to 20 percent.

The following examples serve to illustrate the invention, and are not intended to limit its scope in any way.

The olefinic polymer and copolymers prepared using the invention may be useful in many different applications. For example, these polymers prepared using the invention may be useful in extrusion applications where their broad molecular weight distributions may allow for easier processing. Heat seal film is one such application. They may also be useful in blow-molding and injection molding applications.

### EXAMPLES

### Example 1

A number of exemplary and comparative polymerizations are carried out under the polymerization conditions shown in Table 1. Each polymerization uses as a commercially available catalyst system including Toho THC A (a conventional 4th-generation titanium containing propylene polymerization catalyst available from Toho Catalyst Co., Ltd.), and one or two electron donors as shown in Table 2. Table 2 shows the molecular weight distribution and a number of other characteristics (e.g., bulk density (BD), melt flow, xylene solubles) of the homopolypropylene polymers prepared. Throughout the polymerizations the Al/Si ratio is 50, and 0.43 mol% H₂ concentration is employed. The abbreviated names of the compounds used as the electron donors are as shown in Table 3.

**Table 1**

| **REAGENT:** | | |
|---|---|---|
| ZN Catalyst | | 10 mg |
| | TEAI | 1.0 mmol |
| | Total External Donor | 0.02 mmol |
| | Hydrogen | 0.41-0.43 mol% |
| | Propylene | 1.4 L (0.74 kg) |

| **CONDITIONS:** | | |
|---|---|---|
| | Temperature | 70°C |
| | Time | 1 hour |

**Table 2**

| **DONOR** | **Activity (kg/g/h)** | **BD (g/cm3)** | **MF (dg/min)** | **XS** | **Mn K Daltons** | **Mw K Daltons** | **Mz KK Daltons** | **MWD** |
|---|---|---|---|---|---|---|---|---|
| CPDS* | 46.2 | 0.48 | 7.7 | 1.2 | -- | -- | -- | 8.8 |
| DIDS* | 46.0 | 0.49 | 7.3 | 1.5 | 39.0 | 382 | 2.22 | 9.8 |
| DSBDMS* | 44.0 | 0.48 | 13.0 | 2.2 | 34.3 | 327 | 1.94 | 9.5 |
| VTES* | 40.8 | 0.46 | 28.6 | 3.4 | 35.3 | 215 | 0.92 | 6.1 |
| DMDS* | 44.3 | 0.40 | 65.3 | 11.1 | 25.7 | 172 | 0.87 | 6.7 |
| MTMS* | 42.3 | 0.38 | 70.0 | 9.9 | 27.0 | 177 | 0.89 | 6.6 |
| MTES* | 38.5 | 0.42 | 155.9 | 9.8 | 22.6 | 123 | 5.28 | 5.4 |
| 4:1 MTMS/- CPDS | 40.1 | 0.49 | 7.4 | 1.0 | 37.6 | 353 | 2.13 | 10.5 |
| 1:1 MTMS/- CPDS | 44.9 | 0.49 | 7.1 | 1.4 | 37.6 | 394 | 2.13 | 10.5 |
| 1:1 MTMS/- DSBDMS* | 42.9 | 0.49 | 14.9 | 1.7 | 34.0 | 291 | 1.56 | 8.5 |
| 1:1 DMDS/- CPDS | 44.4 | 0.48 | 8.8 | 1.2 | 37.0 | 345 | 1.68 | 9.3 |
| 1:1 VTES/- CPDS* | 44.0 | 0.47 | 11.0 | 2.1 | 37.0 | 331 | 1.63 | 9.0 |
| 1:1 MTES/- CPDS | 45.5 | 0.49 | 6.4 | 1.6 | 38.7 | 376 | 1.86 | 9.7 |
| 1:1 MTES/- DSBDMS* | 44.0 | 0.48 | 14.1 | 1.3 | 33.7 | 295 | 1.51 | 8.7 |
| 1:1 MTMS/- DIDS* | 48.0 | 0.48 | 13.9 | 2.1 | 29.9 | 289 | 1.51 | 9.7 |
| 1:1 MTES/- DIDS* | 47.2 | 0.49 | 14.5 | 1.2 | 35.1 | 344 | 1.90 | 9.8 |

| | | | | | | | | |
|---|---|---|---|---|---|---|---|---|
| * indicates not an example of the invention; included for comparative purposes. --indicates data not taken or recorded. | | | | | | | | |

**Table 3**

| **ABBREVIATION** | **DESIGNATES:** |
|---|---|
| CPDS | Dicyclopentyl dimethoxysilane |
| DIDS | Diisopropyl dimethoxysilane |
| DSBDMS | Di-sec-butyl dimethoxysilane |
| VTES | Vinyl triethoxysilane |
| DMDS | Dimethyl dimethoxysilane |
| MTMS | Methyl trimethoxysilane |
| MTES | Methyl triethoxysilane |

The results above show that the inventive combinations produce significantly and synergistically broadened molecular weight distributions along with relatively high melt flow rates, while preserving or attaining relatively low xylene solubles levels. High hydrogen response of the synergistic combinations, along with the low hydrogen response of CPDS produces a broader MWD while preserving or attaining comparatively low xylene solubles levels.

## Claims

1. A process for preparing an olefinic polymer comprising contacting at least one olefinic C3+ monomer and a catalyst composition comprising a Ziegler-Natta catalyst, dicyclopentyl dimethoxysilane as a first electron donor, and a second electron donor selected from the group consisting of methyl trimethoxysilane, methyl triethoxysilane, dimethyl dimethoxysilane, and mixtures thereof, wherein the molar ratio of the first electron donor to the second donor is from 1:5 to 5:1,
under reaction conditions suitable to form an olefinic polymer;
wherein the polymer produced has a molecular weight distribution of from 5 to 14,
wherein the olefinic C3+ monomer is propylene.

2. The process of claim 1 wherein the Ziegler-Natta catalyst is based on titanium, magnesium, halogen, cocatalyst, or a combination thereof.

3. The process of claim 1 wherein the first and second electron donors are, in total, present in an amount of from 0.5 to 1000 ppm, based on weight of monomer.

4. The process of claim 3 wherein the first and second electron donors are, in total, present in an amount of from 0.5 to 200 ppm, based on weight of monomer.

5. The process of claim 1 further comprising a cocatalyst.

6. The process of claim 5 wherein the cocatalyst is selected from the group consisting of TEAI, TiBAI, and mixtures thereof.

7. The process of claim 1 wherein the reaction conditions include a temperature from 50 to 100°C and a pressure from 300 to 700 psi (2.1 to 4.8 MPa).

8. The process of claim 1 wherein the olefinic polymer is selected from the group consisting of polypropylene, and random propylene-ethylene copolymers.

9. An olefinic polymer prepared by a process comprising contacting at least one olefinic C3+ monomer and a catalyst composition comprising a Ziegler-Natta catalyst, dicyclopentyl dimethoxysilane as a first electron donor, and a second electron donor selected from the group consisting of methyl trimethoxysilane, methyl triethoxysilane, dimethyl dimethoxysilane, and mixtures thereof, wherein the first and second electron donors are present in a molar ratio of from 1:5 to 5:1, under reaction conditions suitable to form an olefinic polymer wherein the olefinic polymer produced has a molecular weight distribution from 5 to 14.

10. The olefinic polymer of claim 9 having a molecular weight distribution from 7 to 11.

11. The olefinic polymer of claim 9 having a xylene solubles level of less than 6 percent by weight of polymer.

12. The olefinic polymer of claim 9 being polypropylene, or a random propylene-ethylene copolymer.

13. The olefinic polymer of claim 9 wherein the first and second electron donors, in total, are present in an amount of from 0.5 to 1000 ppm, based on weight of monomer.

14. The polymer of claim 9 wherein the reaction further comprises a cocatalyst selected from the group consisting of consisting of TEAI, TiBAI, and mixtures thereof.

15. An article of manufacture comprising a film, an injection molded article, or a blow molded article comprising an olefinic polymer of Claim 9.

16. A catalyst composition for preparing an olefinic polymer comprising a Ziegler-Natta catalyst, dicyclopentyl dimethoxysilane as a first electron donor, and a second electron donor selected from the group consisting of methyl trimethoxysilane, methyl triethoxysilane, dimethyl dimethoxysilane, and mixtures thereof, wherein the first and second electron donors are present in a molar ratio of from 1:5 to 5:1,

## Patentansprüche

1. Verfahren zum Herstellen eines olefinischen Polymers, umfassend das Inkontaktbringen zumindest eines olefinischen C3+-Monomers und einer Katalysatorzusammensetzung, umfassend einen Ziegler-Natta-Katalysator, Dicyclopentyldimethoxysilan als einen ersten Elektronendonor und einen zweiten Elektronendonor, ausgewählt aus der Gruppe, bestehend aus Methyltrimethoxysilan, Methyltriethoxysilan, Dimethyldimethoxysilan und Mischungen davon, wobei das Molverhältnis des ersten Elektronendonors zum zweiten Elektronendonor 1:5 bis 5:1 ist,
unter Reaktionsbedingungen, die sich für die Bildung eines olefinischen Polymers eignen,
wobei das hergestellte Polymer eine Molekulargewichtsverteilung von 5 bis 14 hat, wobei das olefinische C3+-Monomer Propylen ist.

2. Verfahren nach Anspruch 1, wobei der Ziegler-Natta-Katalysator auf Titan, Magnesium, Halogen, Cokatalysator oder einer Kombination davon basiert.

3. Verfahren nach Anspruch 1, wobei der erste und der zweite Elektronendonor insgesamt in einer Menge von 0,5 bis 1000 ppm auf Basis des Monomergewichts vorhanden sind.

4. Verfahren nach Anspruch 3, wobei der erste und der zweite Elektronendonor insgesamt in einer Menge von 0,5 bis 200 ppm auf Basis des Monomergewichts vorhanden sind.

5. Verfahren nach Anspruch 1, ferner umfassend das Hinzufügen eines Cokatalysators.

6. Verfahren nach Anspruch 5, wobei der Cokatalysator aus der Gruppe, bestehend aus TEAI, TiBAI und Mischungen davon, ausgewählt ist.

7. Verfahren nach Anspruch 1, wobei die Reaktionsbedingungen eine Temperatur von 50 bis 100 °C und einen Druck von 300 bis 700 psi (2,1 bis 4,8 MPa) beinhalten.

8. Verfahren nach Anspruch 1, wobei das olefinische Polymer aus der Gruppe, bestehend aus Polypropylen und statischen Propylenethylencopolymeren, ausgewählt ist.

9. Olefinisches Polymer, das mithilfe eines Verfahrens hergestellt ist, das das Inkontaktbringen zumindest eines olefinischen C3+-Monomers und einer Katalysatorzusammensetzung umfasst, umfassend einen Ziegler-Natta-Katalysator, Dicyclopentyldimethoxysilan als einen ersten Elektronendonor und einen zweiten Elektronendonor, ausgewählt aus der Gruppe, bestehend aus Methyltrimethoxysilan, Methyltriethoxysilan, Dimethyldimethoxysilan und Mischungen davon, wobei der erste Elektronendonor und der zweite Elektronendonor in einem Molverhältnis von 1:5 bis 5:1 vorhanden sind, unter Reaktionsbedingungen, die sich für die Bildung eines olefinischen Polymers eignen; wobei das hergestellte Polymer eine Molekulargewichtsverteilung von 5 bis 14 hat.

10. Olefinisches Polymer nach Anspruch 9 mit einer Molekulargewichtsverteilung von 7 bis 11.

11. Olefinisches Polymer nach Anspruch 9 mit einer Konzentration an xylollöslichen Stoffen von weniger als 6 Gew.-% Polymer.

12. Olefinisches Polymer nach Anspruch 9, wobei es sich um ein Polypropylen oder ein statisches Propylenethylencopolymer handelt.

13. Olefinisches Polymer nach Anspruch 9, wobei der erste und der zweite Elektronendonor insgesamt in einer Menge von 0,5 bis 1000 ppm auf Basis des Monomergewichts vorhanden sind.

14. Polymer nach Anspruch 9, wobei die Reaktion ferner einen Cokatalysator umfasst, ausgewählt aus der Gruppe, bestehend aus TEAI, TiBAI und Mischungen davon.

15. Herstellungsartikel, umfassend einen Film, einen spritzgegossenen Artikel oder blasgeformten Artikel, der ein olefinisches Polymer nach Anspruch 9 umfasst.

16. Katalysatorzusammensetzung zum Herstellen eines olefinischen Polymers, umfassend einen Ziegler-Natta-Katalysator, Dicyclopentyldimethoxysilan als einen ersten Elektronendonor und einen zweiten Elektronendonor, ausgewählt aus der Gruppe, bestehend aus Methyltrimethoxysilan, Methyltriethoxylsilan, Dimethyldimethoxysilan und Mischungen davon, wobei der erste Elektronendonor und der zweite Elektronendonor in einem Molverhältnis von 1:5 bis 5:1 vorhanden sind.

## Revendications

1. Procédé de préparation d'un polymère oléfinique comprenant la mise en contact d'au moins un monomère oléfinique en C3+ et d'une composition catalytique comprenant un catalyseur de Ziegler-Natta, du dicyclopentyldiméthoxysilane en tant que premier donneur d'électrons, et un second donneur d'électrons choisi dans le groupe constitué par le méthyltriméthoxysilane, le méthyltriéthoxysilane, le diméthyldiméthoxysilane et des mélanges de ceux-ci, dans lequel le rapport molaire du premier donneur d'électrons au second donneur est de 1:5 à 5:1,
dans des conditions réactionnelles appropriées pour former un polymère oléfinique,
dans lequel le polymère produit possède une distribution de poids moléculaire de 5 à 14,
dans lequel le monomère oléfinique en C3+ est le propylène.

2. Procédé selon la revendication 1, dans lequel le catalyseur de Ziegler-Natta est à base de titane, de magnésium, d'un halogène, d'un co-catalyseur ou d'une combinaison de ceux-ci.

3. Procédé selon la revendication 1, dans lequel les premier et second donneurs d'électrons sont, au total, présents en une quantité de 0,5 à 1000 ppm, par rapport au poids du monomère.

4. Procédé selon la revendication 3, dans lequel les premier et second donneurs d'électrons sont, au total, présents en une quantité de 0,5 à 200 ppm, par rapport au poids du monomère.

5. Procédé selon la revendication 1, comprenant en outre un co-catalyseur.

6. Procédé selon la revendication 5, dans lequel le co-catalyseur est choisi dans le groupe constitué par le TEAl, le TiBAl et des mélanges de ceux-ci.

7. Procédé selon la revendication 1, dans lequel les conditions réactionnelles comprennent une température de 50 à 100 °C et une pression de 300 à 700 psi (2,1 à 4,8 MPa).

8. Procédé selon la revendication 1, dans lequel le polymère oléfinique est choisi dans le groupe constitué par le polypropylène, et des copolymères aléatoires de propylène-éthylène.

9. Polymère oléfinique préparé par un procédé comprenant la mise en contact d'au moins un monomère oléfinique en C3+ et d'une composition catalytique comprenant un catalyseur de Ziegler-Natta, du dicyclopentyldiméthoxysilane en tant que premier donneur d'électrons, et un second donneur d'électrons choisi dans le groupe constitué par le méthyltriméthoxysilane, le méthyltriéthoxysilane, le diméthyldiméthoxysilane et des mélanges de ceux-ci, dans lequel les premier et second donneurs d'électrons sont présents selon un rapport molaire de 1:5 à 5:1, dans des conditions réactionnelles appropriées pour former un polymère oléfinique dans lequel le polymère produit possède une distribution de poids moléculaire de 5 à 14.

10. Polymère oléfinique selon la revendication 9, possédant une distribution de poids moléculaire de 7 à 11.

11. Polymère oléfinique selon la revendication 9, possédant une teneur en composés solubles dans le xylène inférieure à 6 % en poids de polymère.

12. Polymère oléfinique selon la revendication 9, qui est un polypropylène ou un copolymère aléatoire de propylène-éthylène.

13. Polymère oléfinique selon la revendication 9, dans lequel les premier et second donneurs d'électrons sont, au total, présents en une quantité de 0,5 à 1000 ppm, par rapport au poids du monomère.

14. Polymère oléfinique selon la revendication 9, dans lequel la réaction comprend en outre un co-catalyseur choisi dans le groupe constitué par le TEA1, le TiBAl et des mélanges de ceux-ci.

15. Article de fabrication comprenant un film, un article moulé par injection ou un article moulé par soufflage comprenant un polymère oléfinique selon la revendication 9.

16. Composition catalytique pour la préparation d'un polymère oléfinique comprenant un catalyseur de Ziegler-Natta, du dicyclopentyldiméthoxysilane en tant que premier donneur d'électrons, et un second donneur d'électrons choisi dans le groupe constitué par le méthyltriméthoxysilane, le méthyltriéthoxysilane, le diméthyldiméthoxysilane et des mélanges de ceux-ci, dans laquelle les premier et second donneurs d'électrons sont présents selon un rapport molaire de 1:5 à 5:1.
